# EUROPEAN PATENT SPECIFICATION

(11) **EP 3 471 943 B1**
(45) Date of publication and mention of the grant of the patent: **20.04.2022**
(21) Application number: 16919079.0
(22) Date of filing: 21.10.2016
(51) Int. Cl.: B29C 64/112, B33Y 50/00

(54) **MULTIPLE DISPENSE TECHNOLOGY 3D PRINTING**
MEHRFACHAUSGABETECHNOLOGIE FÜR 3D-DRUCK
IMPRESSION 3D À MULTIPLES TECHNOLOGIES DE DISTRIBUTION

(43) Date of publication of application: 24.04.2019
(73) Proprietor: Hewlett-Packard Development Company, L.P., Spring TX 77389 (US)
(72) Inventor: NIELSON, Jeffrey A., Corvallis, Oregon 97330-4239 (US); MOROVIC, Jan, Colchester, Essex C03 4SJ (GB); MOROVIC, Peter, 08174 Sant Cugat del Valles (ES)
(74) Representative: HGF
(86) International application number: PCT/US2016/058088
(87) International publication number: WO 2018/075059

(56) References cited:
- WO-A1-2016/018641
- WO-A1-2016/119899
- WO-A1-2016/119899
- WO-A1-2016/155829
- WO-A1-2016/155829
- US-A- 5 121 329
- US-A1- 2013 287 933
- US-B2- 8 639 484
- Peter Morovic ET AL: "HANS3D: A Multi-Material, Volumetric, Voxel-By-Voxel Content Processing Pipeline for Color and Beyond HANS Imaging Pipeline View project SANCache Project at HP Labs View project", , 20 September 2017 (2017-09-20), XP055658117, Retrieved from the Internet: URL:https://www.researchgate.net/profile/J an_Morovic/publication/319931189_HANS3D_A_ Multi-Material_Volumetric_Voxel-By-Voxel_C ontent_Processing_Pipeline_for_Color_and_B eyond/links/59c22677aca272295a0d9e83/HANS3 D-A-Multi-Material-Volumetric-Voxel-By-Vox el-Content-Processing-Pipeline-for-Color-a nd-Beyond. [retrieved on 2020-01-15]

## Description

### BACKGROUND

Additive manufacturing generally refers to processes that use digital data models to define objects to be built and then builds them by adding material, layer upon layer. Additive manufacturing encompasses a range of three-dimensional (3D) printing technologies including stereolithography, digital light processing, fused deposition modeling, and selective laser sintering. When compared to other manufacturing processes such as machining and injection molding, additive manufacturing processes enable increased possibilities for creating objects with highly complex and customized shapes.

US2013/0287933 relates to a 3D printing system comprising a coarse 3D printing interface to form a 3D object core and a fine 3D printing interface to form a 3D object shell around at least some of the 3D object core.

US8639484 relates to apparatus for manufacturing complex parts and devices which utilize a CAD environment to design a part or device to be created.

WO2016/119899 relates to a representation of a three-dimensional object for production of said object.

WO2016/155829 relates to structure forming for the production of a three-dimensional object.

### BRIEF DESCRIPTION OF THE DRAWINGS

Examples will now be described with reference to the accompanying drawings, in which:
FIG. 1 shows an example of a multiple dispense technology 3D printing system suitable to perform a data formatting method that can enable a single digital object representation to be dispensed from multiple different dispensing technologies to generate a multi-material object;
FIG. 2 shows an example data structure that includes a list of material vectors (Mvecs) that can specify materials or combinations of materials in addition to dispensing technologies with which to dispense the materials;
FIG. 3 shows an example data structure that includes an alternate expression of Mvecs that can specify materials or combinations of materials in addition to dispensing technologies with which to dispense the materials;
FIG. 4 shows an example data structure as in FIG. 3 that includes an additional material column;
FIGs. 5 and 6 are flow diagrams showing example methods of multiple dispense technology 3D printing.

Throughout the drawings, identical reference numbers designate similar, but not necessarily identical, elements.

### DETAILED DESCRIPTION

While different additive manufacturing technologies can implement a variety of different processes for adding and coalescing materials, they all generally fabricate objects directly from digital 3D model data by adding material, layer upon layer. These digital representations of objects have been accomplished mostly using surface-representative formats such as STL (stereolithography) and VRML (Virtual Reality Modeling Language). However, some 3D printing applications involve creating objects that have increasingly complex material and structural makeup. For example, creating biomimetic tissues can involve the 3D printing of biocompatible materials such as cells of varying types and densities, scaffolding structures, extracellular matrices, and vascularization. With the continued advancements in additive manufacturing technologies, 3D printing devices have become better able to produce these and other increasingly complex objects. However, it is apparent that STL and other digital data formats are insufficient to represent such complex objects.

In some prior examples, objects comprising multiple materials can be printed from single digital object representations if the multiple dispensers being used are of the same type of dispensing technology, such as when C, M, Y binder is dispensed from an inkjet based system, or build/support extrusion material is dispensed from a filament based system. However, printing objects comprising multiple materials dispensed using fundamentally different types of dispensing technologies has been accomplished by creating multiple digital object representations to separately drive each of the different dispensing technologies, and by manually separating and coordinating the digital data between the multiple digital representations and the multiple dispensers. Thus, objects to be formed from multiple materials to be dispensed from different types of dispensing technologies, such as a syringe based technology and an inkjet based technology, have in the past been created through a generally inefficient process that includes manually transporting the objects between devices that implement those different dispensing technologies while manually separating and coordinating multiple copies of the digital object representations to separately drive each of the different devices.

Accordingly, examples of a multiple dispense technology system described herein provide a data formatting method and multi-dispenser device that can specify and implement different dispensing technologies at a print resolution voxel level to control the composition of multi-material 3D-printed objects. In general, each dispense technology (e.g., a printhead, a syringe, etc.) has a native print-resolution voxel 'size' which is the resolution or addressable space at which that dispense technology is able to deposit materials. Multiple material dispensing mechanisms implementing fundamentally different dispensing technologies can be combined and controlled within the single system. The multiple dispense technology system thereby avoids prior inefficiencies associated with having to create multiple digital object representations and manually coordinating between the multiple digital representations and the different dispensing technologies.

The multiple dispense technology system enables the creation of a multi-material object from multiple different dispensing technologies using a single digital object representation. The system formats digital object representations to enable the dividing, the processing, and the dispensing of objects with multiple different dispensing technologies. In some examples, the system provides (e.g., formats) a digital object representation as material vectors (Mvecs), with each Mvec representing a material to be dispensed. Mvecs represent all of the possible combinations of materials (e.g., agents, powders etc.) that can be deposited at a single voxel. Thus, Mvecs represent anything that can make up the contents of a voxel, such as powder, agents, and even fusing energy. The system can also treat the choice of dispensing technology for each material as an additional dimension of the material vectors. Thus, instead of just considering the content of each print resolution voxel, Mvecs can also specify the type of dispensing technology that will dispense the content.

In some examples, the multiple dispense technology system can use material volume coverages (Mvocs) to specify a relative distribution of Mvecs across a region or portion of an object. Material volume coverages (Mvocs) are relative volume coverages or proportions of each of the Mvecs over a given volume. Alternatively, Mvocs can be considered to be probability distributions of Mvecs over a volume. Because Mvecs represent different material types available for dispensing, Mvocs can be used to achieve particular material compositions across different regions of an object. Thus, Mvocs provide a mechanism for specifying different properties within and across an object.

In some examples, the system can include multiple dispensing components, each component implementing a different dispensing technology, where all of the different components are integrated within a single device such as a single 3D printing device. In other examples, the multiple dispensing components can be independent, stand-alone dispensing components. The multiple dispense technology system can create objects with greater functionality and complexity through an increased range of material composition that cannot be achieved using a single dispensing technology alone.

The ability to generate increasingly complex objects is beneficial and applicable across a variety of disciplines. In 3D bioprinting, for example, the creation of miniature tissues (i.e., organoids) for drug discovery can involve the low-resolution dispensing of high-viscosity scaffolding components, such as hydrogels, in addition to involving the high-resolution "sprinkling" of cells, extracellular matrices, and cellular growth factors. By combining multiple dispensing technologies together to create a single object, complex biomimetic tissues can be created that could not previously be created using a single dispensing technology alone.

In one example, a method of multiple dispense technology 3D printing includes receiving digital model data representing an object. The method includes formatting the data into an Mvec (material vector) specification that includes an Mvec to specify a material component of a voxel. The Mvec includes an associated dispense technology (DT) index to identify one of multiple available dispense technologies for dispensing the material component.

In another example, a multiple dispense technology 3D printing system includes multiple material dispensing technologies. The system also includes a controller to generate a specification from a single digital object representation. The specification comprises Mvecs (material vectors) that each specify a material component of a print resolution voxel. Each Mvec also specifies one of the multiple material dispensing technologies with which to dispense the material component.

In another example, a non-transitory machine-readable storage medium stores instructions that when executed by a processor of a multiple dispense technology 3D printing system causes the system to receive digital data representing an object. For each print resolution voxel of the object, a material is specified to be dispensed onto the voxel, and for each specified material, a dispense technology is specified with which to dispense the material.

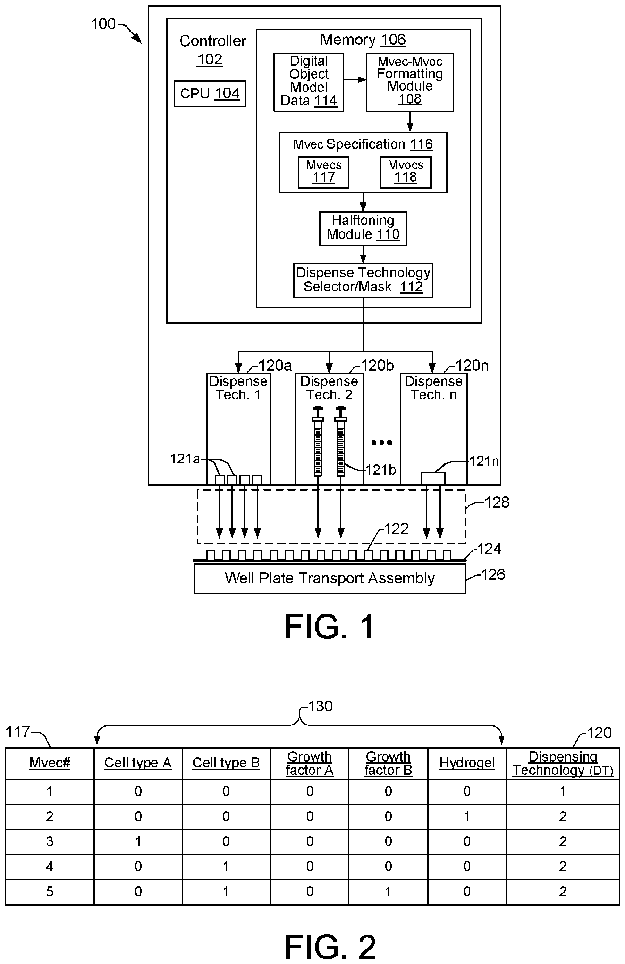

FIG. 1 shows an example of a multiple dispense technology 3D printing system 100 suitable to perform a data formatting method that can divide, process, and dispense a single digital object representation from multiple different dispensing technologies to generate a multi-material object. As shown in FIG. 1, an example system 100 can include a controller 102 with a processor (CPU) 104 and a memory 106. The controller 102 can control various operations of the multiple dispense technology system 100 to facilitate, for example, the parsing of digital object representations for dispensing among multiple dispensing technology components. In some examples the controller 102 may additionally include other electronics (not shown) for communicating with and controlling various components of the multiple dispense technology system 100. Such other electronics can include, for example, discrete electronic components and/or an ASIC (application specific integrated circuit). Memory 106 can include both volatile (i.e., RAM) and nonvolatile memory components (e.g., ROM, hard disk, optical disc, CD-ROM, magnetic tape, flash memory, etc.). The components of memory 106 comprise non-transitory, machine-readable (e.g., computer/processor-readable) media that can provide for the storage of machine-readable coded program instructions, data structures, program instruction modules, JDF (job definition format), and other data and/or instructions executable by a processor 104 of the multiple dispense technology system 100.

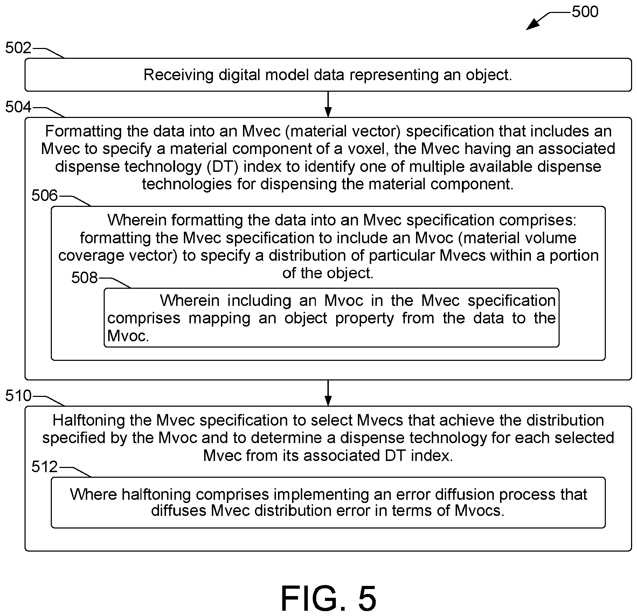

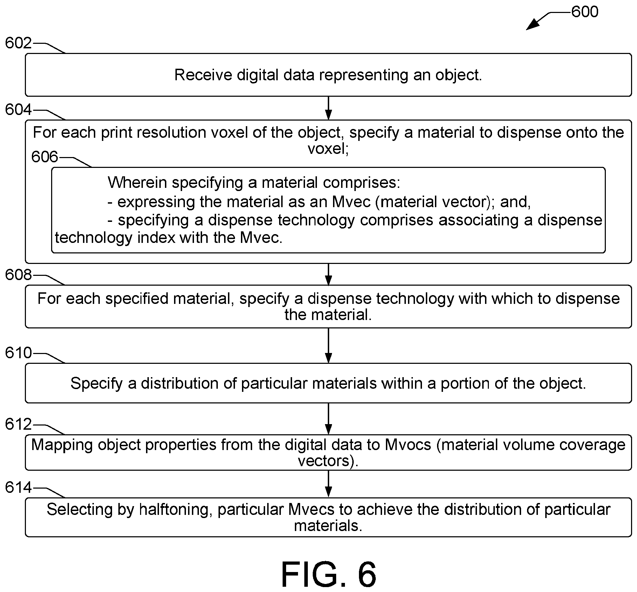

Examples of executable instructions to be stored in memory 106 include instructions associated with an Mvec-Mvoc formatting module 108, a halftoning module 110, and a dispense technology selector/mask 112. Examples of data stored in memory 106 can include digital object model data 114, and an Mvec specification 116 generated from a digital object representation stored in the digital object model data 114. In general, modules 108, 110, 112, 114, and 116, include programming instructions and/or data executable by a processor 104 to cause the multiple dispense technology system 100 to perform operations related to dispensing materials from multiple dispensing technologies 120 (illustrated as dispense technologies 120a, 120b, through 120n) onto dispense targets. Dispense targets generally include objects being formed by dispensing or printing materials. More specifically, dispense targets can include object receptacles positioned on a platform into which objects can be dispensed or printed, such as wells 122 on a well plate 124, as shown in FIG. 1. Such dispensing operations can include, for example, the operations of methods 500 and 600, described below with respect to FIGs. 5 and 6, respectively.

The multiple dispensing technologies 120 can include various dispensing technology components or devices capable of dispensing a range of materials such as agents, growth factors, cell types, hydrogels, scaffolding materials, and so on. Thus, some examples of dispensing technologies 120 can include dispensing devices such as inkjet printing devices 120a and syringe devices 120b. An inkjet printing device 120a is generally capable of dispensing materials with high resolution at relatively low speeds through printhead nozzles 121a, while a syringe device 120b can dispense materials with lower resolutions at higher speeds through syringe needles 121b. For example, in different applications, in addition to dispensing inks and other liquid agents, inkjet devices can dispense photopolymer build material, bio-cells, hydrogel support material, growth factors, and so on. In some examples, cells and growth factor can be dispensed with inkjet technology while hydrogel is dispensed with a syringe dispense technology. While two specific types of dispensing technologies 120 are shown in FIG. 1 (i.e., inkjet printing technology 120a, syringe technology 120b), other types of dispensing technologies 120 are possible and contemplated. For example, other dispensing technologies 120 can include technologies such as acoustic dispensing, pipette dispensing, fused deposition modeling (FDM) dispensing, and others.

As noted above, a multiple dispense technology 3D printing system 100 can include object receptacles positioned on a platform, such as wells 122 on a well plate 124, into which materials can be dispensed from multiple dispensing technologies 120. The system 100 can additionally include a transport assembly 126 to position and reposition the well plate 124 and wells 122 relative to the multiple dispensing technologies 120 while materials are being dispensed. Thus, a material dispense zone 128 can be defined adjacent to the dispensing technologies 120 in an area between the wells 122 on the well plate 124 and the material output mechanisms of the dispensing technologies 120 (e.g., printhead nozzles 121a, syringe needles 121b, etc.). In some examples, the transport assembly 126 can position object receptacles such as wells 122 on well plate 124 to provide an appropriate alignment and distance between the receptacles and dispense technologies 120 through the dispense zone 128.

The multiple dispense technology system 100 can receive (e.g., from a computer) and store digital object representations, or models, as digital object model data 114 in a memory 106. Instructions in the Mvec-Mvoc formatting module 108 are executable on the processor 104 to divide and process a single digital object representation from the digital object model data 114, and to dispense materials from the multiple dispensing technologies 120 to generate a multi-material object. The Mvec-Mvoc formatting module 108 can format the data from a single digital object representation into a material vector (Mvec) specification 116. The formatting module 108 generates Mvecs 117 within the Mvec specification 116 that can specify the material contents of individual print resolution voxels of the object. The potential material content makeup for each voxel depends on the number of materials, or Mvecs 117, available from the system 100. For example, in a powder based system that includes three possible agents to dispense onto a base powder, the different ways to combine the powder with the three agents yields eight (i.e., 2³) possible material compositions for each voxel.

In addition to specifying the material contents of individual print resolution voxels, the Mvecs 117 in the Mvec specification 116 also specify which dispensing technology 120 (e.g., 120a - 120n) to be used to dispense each material. Thus, as shown in the example list of Mvecs 117 in FIG. 2, each Mvec 117 in the list includes an associated dispensing technology (DT) 120 index to specify which dispensing technology 120 the system uses to dispense the material or materials specified by the Mvec 117. For example, Mvec #1 defines an empty voxel with no dispensed material. Mvec #2 defines a voxel as containing hydrogel, with the hydrogel material being dispensed or printed using dispensing technology 1. Mvecs #3-5 each define voxels containing different materials or combinations of materials that are printed using dispensing technology 2. Mvec #3 defines a voxel as containing cell type A, Mvec #4 defines a voxel as containing cell type B, and Mvec #5 defines a voxel as containing cell type B and growth factor B combined.

In different examples, a list of Mvecs 117 can either be a full set of all combinations of the system's material components, or it can include only those material combinations that are relevant for a particular use of the system 100. As shown in FIG. 2, for example, the listed Mvecs #1 - #5 specify materials 130 or combinations of materials 130 that are relevant to dispensing a particular object. It is apparent, however, that the available materials 130 in the system enable numerous additional combinations of materials that can be dispensed. Thus, in this example, a list of Mvecs 117 can specify a full set of all 26 combinations of the system's material components, expressing the different material compositions with additional Mvecs, such as Mvecs #1 - #26.

When formatting a digital object representation (i.e., from digital object model data 114), in addition to generating Mvecs 117, the Mvec-Mvoc formatting module 108 can map object properties to Mvocs 118 (material volume coverage vectors). Mvocs 118 can specify the use or distribution of particular Mvecs 117 within and/or across different portions or regions of an object to enable control over the material makeup of those object regions. For example, by mapping object properties to Mvocs 118, one half of an object can have a first material makeup specified by a first Mvoc 118, while a second half of the object can have a second material makeup specified by a second Mvoc 118. Each Mvoc 118 can specify a probability that voxels within a certain volume of an object are covered by a particular distribution of an Mvec 117 or combination of Mvecs 117. Thus, mapping object properties from a digital object representation (i.e., from digital object model data 114) enables control over the material makeup and properties of different portions of an object.

The halftoning module 110 executes to implement the object properties mapped to Mvocs 118. The halftoning module 110 can analyze the distribution of Mvecs 117 specified by Mvocs 118, and select single Mvecs 117 for each object pixel in order to achieve the specified Mvec distribution. Thus, for any given local area of an object, halftoning ensures that the correct volume coverage of Mvecs 117 will be found. In addition, in a system 100 capable of dispensing N materials, a halftone generated by halftoning module 110 can include N + 1 channels, with the N + 1^{st} channel corresponding to a dispense technology selector/mask 112. While N channels of the halftone represent the different Mvecs 117 to be dispensed, the N + 1^{st} channel informs the dispense technology selector/mask 112 which dispensing technology 120 is to be used to deposit which Mvec 117 of the halftone. In general, the Mvec construction or definition, which includes a material specification as well as an associated index indicating a dispense technology specification, is coupled with the halftoning process in order to distinguish the different dispensing technologies 120 within the system 100. In some examples, the halftoning module 110 implements an error diffusion process that expresses and diffuses Mvec distribution error in terms of Mvocs. In some examples, the halftoning module 110 can implement a threshold matrix based halftoning process.

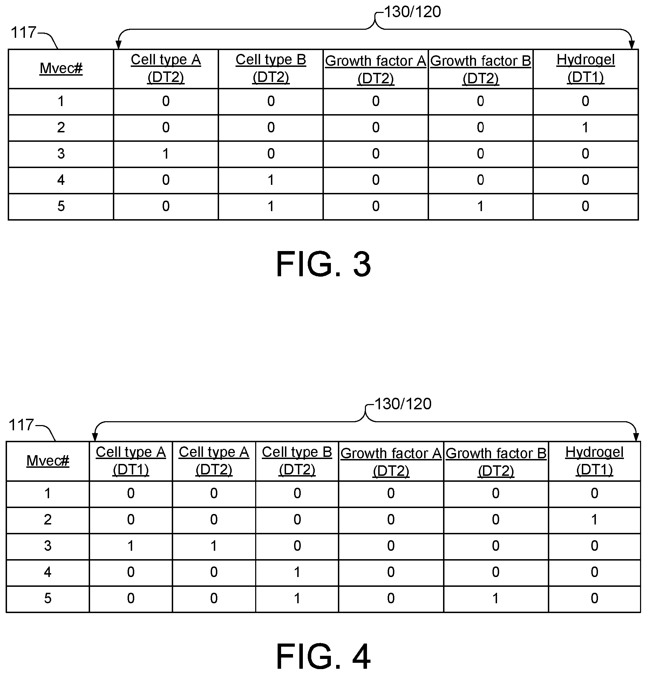

An alternate method of expressing Mvecs 117 is shown in FIG. 3. While the expression of Mvecs 117 provided in the example of FIG. 2 assumes that specified materials 130 and their associated dispensing technologies (DT) 120 are decoupled from one another, and that one dispensing technology is used at a time, an alternate expression of Mvecs 117 provided in the FIG. 3 example couples the specified materials 130 together with the dispensing technologies (DT) 120.

In the FIG. 3 example, the results are the same as in the first example provided in FIG. 2, except that the use of Hydrogel is coupled to dispensing technology 1 (DT1), while the use of the other material components is linked to DT2. This alternate expression of Mvecs 117 allows for the use of multiple dispensing technologies within the same Mvec 117. For example, an expression of [0 1 0 0 1] in FIG. 3 would combine cell type B, printed with DT2, and hydrogel, printed with DT1, within the same Mvec 117. Thus, multiple dispensing technologies 120 can be used on the same voxel within a same dispensing event, virtually at the same time. This alternate expression also allows for the same material 130 to be printed using different dispensing technologies 120 in different voxels. For example, as shown in FIG. 4, an additional material/dispense column 130/120, 'Cell type A (DT1)', will allow for the specification of cell type A being printed either using DT1 or DT2. In this case the 'mask' (i.e. the strategy with which to distinguish what voxel content or Mvec 117 is printed with which dispensing technology 120) is implicit within the definition of the Mvecs 117 themselves.

FIGs. 5 and 6 are flow diagrams showing example methods 500 and 600, of multiple dispense technology 3D printing. Methods 500 and 600 are associated with examples discussed above with regard to FIGs. 1 - 4, and details of the operations shown in methods 500 and 600 can be found in the related discussion of such examples. The operations of methods 500 and 600 may be embodied as programming instructions stored on a non-transitory, machine-readable (e.g., computer/processor-readable) medium, such as memory 106 shown in FIG. 1. In some examples, implementing the operations of methods 500 and 600 can be achieved by a processor, such as a processor 104 of FIG. 1, reading and executing the programming instructions stored in a memory 106. In some examples, implementing the operations of methods 500 and 600 can be achieved using an ASIC and/or other hardware components alone or in combination with programming instructions executable by a processor 104.

The methods 500 and 600 may include more than one implementation, and different implementations of methods 500 and 600 may not employ every operation presented in the respective flow diagrams of FIGs. 5 and 6. Therefore, while the operations of methods 500 and 600 are presented in a particular order within their respective flow diagrams, the order of their presentations is not intended to be a limitation as to the order in which the operations may actually be implemented, or as to whether all of the operations may be implemented. For example, one implementation of method 600 might be achieved through the performance of a number of initial operations, without performing one or more subsequent operations, while another implementation of method 600 might be achieved through the performance of all of the operations.

Referring now to the flow diagram of FIG. 5, an example method 500 of multiple dispense technology 3D printing begins at block 502 with receiving digital model data representing an object. The method continues at block 504 with formatting the data into an Mvec (material vector) specification that includes an Mvec to specify a material component of a voxel. In some examples, the Mvec has an associated dispense technology (DT) index to identify one of multiple available dispense technologies for dispensing the material component. As shown at block 506 formatting the data into an Mvec specification comprises formatting the Mvec specification to include an Mvoc (material volume coverage vector) to specify a distribution of particular Mvecs within a portion of the object. In some examples, including an Mvoc in the Mvec specification comprises mapping an object property from the data to the Mvoc, as shown at block 508.

The method 500 can continue as shown at block 510, with halftoning the Mvec specification to select Mvecs that achieve the distribution specified by the Mvoc, and to determine a dispense technology for each selected Mvec from its associated DT index. As shown at block 512, halftoning can include implementing an error diffusion process that diffuses Mvec distribution error in terms of Mvocs.

Referring now to the flow diagram of FIG. 6, an example method 600 of multiple dispense technology 3D printing begins at block 602 with receiving digital data representing an object. As shown at block 604, for each print resolution voxel of the object, a material is specified to dispense onto the voxel. In some examples, as shown at block 606, specifying a material can include expressing the material as an Mvec (material vector), and specifying a dispense technology can include associating a dispense technology index with the Mvec.

Continuing at block 608, for each specified material, a dispense technology can be specified with which to dispense the material. As shown at block 610, the method can include specifying a distribution of particular materials within a portion of the object. The method also includes mapping object properties from the digital data to Mvocs (material volume coverage vectors), and selecting by halftoning, particular Mvecs to achieve the distribution of particular materials, as shown at blocks 612 and 614, respectively.

## Claims

1. A method of multiple dispense technology 3D printing comprising:
receiving digital model data representing an object;
formatting the data into a material vector, Mvec, specification that includes an Mvec to specify a material component of a print resolution voxel, the Mvec having an associated dispense technology, DT, index to identify one of multiple available dispense technologies for dispensing the material component; and
dispensing the material component using a dispense technology according to the DT index.

2. A method as in claim 1, wherein formatting the data into an Mvec specification comprises:
including a material volume coverage vector, Mvoc, in the Mvec specification to specify a distribution of particular Mvecs within a portion of the object.

3. A method as in claim 2, wherein including an Mvoc in the Mvec specification comprises mapping an object property from the data to the Mvoc.

4. A method as in claim 2, further comprising:
halftoning the Mvec specification to select Mvecs that achieve the distribution specified by the Mvoc and to determine a dispense technology for each selected Mvec from its associated DT index.

5. A method as in claim 4, wherein halftoning comprises implementing an error diffusion process that diffuses Mvec distribution error in terms of Mvocs.

6. A multiple dispense technology 3D printing system comprising:
multiple material dispensing technologies;
a controller to generate a specification from a single digital object representation, the specification comprising a material vector, Mvec, that specifies a material component of a print resolution voxel, the Mvec having an associated dispense technology, DT, index to identity one of the multiple material dispensing technologies for dispensing the material component.

7. A system as in claim 6, wherein the specification comprises:
a material volume coverage vector, Mvoc, to specify a distribution of particular Mvecs within a portion of the object to be printed from the digital object representation.

8. A system as in claim 7, wherein the controller includes a memory comprising a halftoning module to generate a halftone of the specification that selects Mvecs from the Mvoc that will achieve the distribution of particular Mvecs and determines a dispense technology for each of the selected Mvecs.

9. A system as in claim 8, wherein the halftoning module implements a halftoning process selected from the group consisting of an error diffusion process and a threshold matrix halftoning process.

10. A system as in claim 6, wherein the multiple material dispensing technologies are selected from the group consisting of an inkjet dispensing technology, a syringe dispensing technology, an acoustic dispensing technology, pipette dispensing technology, and a fused deposition modeling dispensing technology.

11. A non-transitory machine-readable storage medium storing instructions that when executed by a processor of a multiple dispense technology 3D printing system cause the system to:
receive digital data representing an object;
format the data into a material vector, Mvec, specification that includes an MVec to specify, for each print resolution voxel of the object, a material to dispense onto the voxel, the Mvec having an associated dispense technology, DT, index to identify one of multiple available dispense technologies for dispensing the material.

12. A medium as recited in claim 11, the instructions further causing the 3D printing system to specify a distribution of particular materials within a portion of the object.

13. A medium as recited in claim 12, wherein specifying a distribution of particular materials comprises:
mapping object properties from the digital data to material volume coverage vectors, Mvocs; and,
selecting by halftoning, particular Mvecs to achieve the distribution of particular materials.

## Patentansprüche

1. Verfahren zum 3D-Drucken mit Mehrfachabgabetechnologie, das Folgendes umfasst:
Empfangen digitaler Modelldaten, die einem Objekt entsprechen;
Formatieren der Daten in eine Materialvektor(Mvec)-Spezifikation, die einen Mvec einschließt, um eine Materialkomponente eines Druckauflösungsvoxels zu spezifizieren, wobei der Mvec einen verknüpften Abgabetechnologie(dispense technology - DT)-Index aufweist, um eine von mehreren verfügbaren Abgabetechnologien zum Abgeben der Materialkomponente zu identifizieren; und
Abgeben der Materialkomponente unter Verwendung einer Abgabetechnologie gemäß dem DT-Index.

2. Verfahren nach Anspruch 1, wobei das Formatieren der Daten in eine Mvec-Spezifikation Folgendes umfasst:
Einschließen eines Materialvolumenabdeckungsvektors (Mvoc) in der Mvec-Spezifikation, um eine Verteilung bestimmter Mvecs innerhalb eines Abschnitts des Objekts zu spezifizieren.

3. Verfahren nach Anspruch 2, wobei das Einschließen eines Mvoc in die Mvec-Spezifikation ein Zuordnen einer Objekteigenschaft aus den Daten zu dem Mvoc umfasst.

4. Verfahren nach Anspruch 2, das ferner Folgendes umfasst:
Halbtonrastern der Mvec-Spezifikation, um Mvecs auszuwählen, um die Verteilung zu erreichen, die durch den Mvoc spezifiziert ist, und um eine Abgabetechnologie für jeden ausgewählten Mvec aus seinem verknüpften DT-Index zu bestimmen.

5. Verfahren nach Anspruch 4, wobei das Halbtonrastern ein Implementieren eines Fehlerdiffusionsprozesses umfasst, der den Mvec-Verteilungsfehler in Form von Mvocs diffundiert.

6. 3D-Drucksystem mit Mehrfachabgabetechnologie, das Folgendes umfasst:
Mehrfachabgabetechnologien für Material;
einen Controller, um eine Spezifikation aus einer einzelnen digitalen Objektentsprechung zu erzeugen, wobei die Spezifikation einen Materialvektor (Mvec) umfasst, der eine Materialkomponente eines Druckauflösungsvoxels spezifiziert, wobei der Mvec einen verknüpften Abgabetechnologie(DT)-Index aufweist, um eine der mehreren Materialabgabetechnologien zum Abgeben der Materialkomponente zu identifizieren.

7. System nach Anspruch 6, wobei die Spezifikation Folgendes umfasst:
einen Materialvolumenabdeckungsvektor (Mvoc), um eine Verteilung bestimmter Mvecs innerhalb eines Abschnitts des zu druckenden Objekts aus der digitalen Objektentsprechung zu spezifizieren.

8. System nach Anspruch 7, wobei der Controller einen Speicher einschließt, der ein Halbtonrasterungsmodul umfasst, um einen Halbton der Spezifikation zu erzeugen, der Mvecs aus dem Mvoc auswählt, was die Verteilung bestimmter Mvecs erreichen wird und eine Abgabetechnologie für jede der ausgewählten Mvecs bestimmt.

9. System nach Anspruch 8, wobei das Halbtonrasterungsmodul einen Halbtonrasterungsprozess implementiert, der aus der Gruppe ausgewählt ist, die aus einem Fehlerdiffusionsprozess und einem Schwellenmatrixhalbtonrasterungsprozess besteht.

10. System nach Anspruch 6, wobei die mehreren Materialabgabetechnologien aus der Gruppe ausgewählt sind, die aus einer Tintenstrahlabgabetechnologie, einer Spritzenabgabetechnologie, einer akustischen Abgabetechnologie, einer Pipettenabgabetechnologie und einer Schmelzschichtungsabgabetechnologie besteht.

11. Nichtflüchtiges maschinenlesbares Speichermedium, das Anweisungen speichert, die, wenn sie durch einen Prozessor eines 3D-Drucksystems mit Mehrfachabgabetechnologie ausgeführt werden, das System zu Folgendem veranlassen:
Empfangen digitaler Daten, die einem Objekt entsprechen;
Formatieren der Daten in eine Materialvektor(Mvec)-Spezifikation, die einen MVec einschließt, um für jeden Druckauflösungsvoxel des Objekts ein Material zu spezifizieren, das auf den Voxel abzugeben ist, wobei der Mvec einen verknüpften Abgabetechnologie(DT)-Index aufweist, um eine von mehreren verfügbaren Abgabetechnologien zum Abgeben des Materials zu identifizieren.

12. Medium nach Anspruch 11, wobei die Anweisungen ferner das 3D-Drucksystem veranlassen, eine Verteilung bestimmter Materialien innerhalb eines Abschnitts des Objekts zu spezifizieren.

13. Medium nach Anspruch 12, wobei das Spezifizieren einer Verteilung bestimmter Materialien Folgendes umfasst:
Zuordnen von Objekteigenschaften aus den digitalen Daten zu Materialvolumenabdeckungsvektoren (Mvocs); und
Auswählen, durch Halbtonrastern, bestimmter Mvecs, um die Verteilung bestimmter Materialien zu erreichen.

## Revendications

1. Procédé d'impression 3D à technologie de distribution multiple comprenant :
la réception des données de modèle numérique représentant un objet ;
le formatage des données en une spécification de vecteur de matériau, Mvec, qui comporte un Mvec pour spécifier un composant de matériau d'un voxel de résolution d'impression, le Mvec ayant un indice de technologie de distribution associée, DT, afin d'identifier l'une des multiples technologies de distribution disponibles pour distribuer le composant de matériau ; et
la distribution du composant de matériau à l'aide d'une technologie de distribution selon l'indice DT.

2. Procédé selon la revendication 1, dans lequel le formatage des données en une spécification Mvec comprend :
l'inclusion d'un vecteur de couverture de volume de matériau, Mvoc, dans la spécification Mvec pour spécifier une répartition de Mvec particuliers dans une partie de l'objet.

3. Procédé selon la revendication 2, dans lequel l'inclusion d'un Mvoc dans la spécification Mvec comprend le mappage d'une propriété d'objet des données au Mvoc.

4. Procédé selon la revendication 2, comprenant en outre :
la création de demi-tons de la spécification Mvec pour sélectionner les Mvec qui réalisent la répartition spécifiée par le Mvoc et pour déterminer une technologie de distribution pour chaque Mvec sélectionné à partir de son index DT associé.

5. Procédé selon la revendication 4, dans lequel la création de demi-tons comprend la mise en oeuvre d'un processus de diffusion d'erreur qui diffuse une erreur de répartition Mvec en termes de Mvoc.

6. Système d'impression 3D à technologie de distribution multiple comprenant :
de multiples technologies de distribution de matériaux ;
un dispositif de commande pour générer une spécification à partir d'une seule représentation d'objet numérique, la spécification comprenant un vecteur de matériau, Mvec, qui spécifie un composant de matériau d'un voxel de résolution d'impression, le Mvec ayant un indice de technologie de distribution associée, DT, afin d'identifier l'une des multiples technologies de distribution de matériau pour distribuer le composant de matériau.

7. Système selon la revendication 6, dans lequel la spécification comprend :
un vecteur de couverture de volume de matériau, Mvoc, pour spécifier une répartition de Mvec particuliers dans une partie de l'objet à imprimer à partir de la représentation d'objet numérique.

8. Système selon la revendication 7, dans lequel le dispositif de commande comporte une mémoire comprenant un module de création de demi-tons pour générer un demi-ton de la spécification qui sélectionne les Mvec, à partir du Mvoc, qui réaliseront la répartition de Mvec particuliers, et détermine une technologie de distribution pour chacun des Mvec sélectionnés.

9. Système selon la revendication 8, dans lequel le module de création de demi-tons met en oeuvre un processus de création de demi-tons sélectionné dans le groupe constitué d'un processus de diffusion d'erreur et d'un processus de création de demi-tons de matrice de seuil.

10. Système selon la revendication 6, dans lequel les multiples technologies de distribution de matériau sont sélectionnées dans le groupe constitué d'une technologie de distribution à jet d'encre, d'une technologie de distribution par seringue, d'une technologie de distribution acoustique, d'une technologie de distribution par pipette et d'une technologie de distribution de modélisation de dépôt par fusion.

11. Support de stockage non transitoire lisible par machine stockant des instructions qui, lorsqu'elles sont exécutées par un processeur d'un système d'impression 3D à technologie de distribution multiple, amènent le système à :
recevoir des données numériques représentant un objet ;
formater les données en une spécification de vecteur de matériau, Mvec, qui comporte un MVec afin de spécifier, pour chaque voxel de résolution d'impression de l'objet, un matériau à distribuer sur le voxel, le Mvec ayant un indice de technologie de distribution associée, DT, afin d'identifier l'une des multiples technologies de distribution disponibles pour distribuer le matériau.

12. Support selon la revendication 11, les instructions amenant en outre le système d'impression 3D à spécifier une répartition de matériaux particuliers à l'intérieur d'une partie de l'objet.

13. Support selon la revendication 12, dans lequel la spécification d'une répartition de matériaux particuliers comprend :
le mappage des propriétés d'objet des données numériques aux vecteurs de couverture de volume de matériau, Mvoc ; et,
la sélection par création de demi-tons de Mvec particuliers afin de réaliser la répartition de matériaux particuliers.
